# EUROPEAN PATENT SPECIFICATION

(11) **EP 4 235 929 B1**
(45) Date of publication and mention of the grant of the patent: **18.03.2026**
(21) Application number: 21886560.8
(22) Date of filing: 16.09.2021
(51) Int. Cl.: H01M 50/107, H01M 50/152, H01M 50/528, H01M 50/559, H01M 50/342, H01M 50/531, H01M 50/186

(54) **SECONDARY BATTERY**
SEKUNDÄRBATTERIE
BATTERIE SECONDAIRE

(30) Priority: 26.10.2020 KR 20200139612
(43) Date of publication of application: 30.08.2023
(60) Divisional application: 25216470.2
(73) Proprietor: Samsung SDI Co., Ltd., Yongin-si, Gyeonggi-do 17084 (KR)
(72) Inventor: KIM, Dae Kyu, Yongin-si, Gyeonggi-do 17084 (KR); LEE, Sang Hyo, Yongin-si, Gyeonggi-do 17084 (KR)
(74) Representative: Marks & Clerk LLP
(86) International application number: PCT/KR2021/012690
(87) International publication number: WO 2022/092566

(56) References cited:
- EP-B1- 2 337 110
- KR-A- 20100 041 472
- KR-A- 20120 041 511
- KR-A- 20140 106 328
- KR-A- 20160 143 589
- KR-A- 20190 127 089
- KR-A- 20210 006 202
- US-A1- 2009 297 927

## Description

### TECHNICAL FIELD

The present invention relates to a secondary battery.

### BACKGROUND ART

Unlike a primary battery that cannot be charged, a secondary battery is a rechargeable and dischargeable battery. A low-capacity secondary battery may be used for various portable small-sized electronic devices, such as a smartphone, a feature phone, a notebook computer, a digital camera, or a camcorder, and a high-capacity secondary battery is widely used as a power source for motor drives, such as those in hybrid vehicles or electric vehicles. These lithium ion secondary batteries may be classified into cylindrical, prismatic, and pouch-type secondary batteries in terms of shape.

Specifically, a cylindrical lithium secondary battery generally includes a cylindrical electrode assembly, a cylindrical case to which the electrode assembly is coupled, an electrolyte injected into the case to allow movement of lithium ions, and a cap assembly that is coupled to one side of the case to prevent leakage of the electrolyte and prevents separation of the electrode assembly.

Attention is drawn to the disclosure of EP2337110B1 which discloses a cap assembly loaded on an open upper end of a cylindrical container of a battery in which an electrode assembly is mounted in the cylindrical container. The cap assembly includes a safety vent having a predetermined notch configured to rupture by high-pressure gas generated in the battery, a current interruptive device coupled to a bottom of the safety vent by welding for interrupting current when internal pressure of the battery increases, and a current interruptive device gasket for surrounding an outer circumference of the current interruptive device. The current interruptive device includes two or more through holes for gas discharge. The through holes are formed such that the sum of areas of the through holes is equal to 20 % to 50 % of an entire area of the current interruptive device. When high-pressure gas is generated in the battery, the cap assembly effectively interrupts current and rapidly discharges the gas, thereby greatly improving safety of the battery.

Attention is also drawn to the disclosure of KR20190127089A which discloses a cap assembly for a rechargeable battery. The cap assembly comprises a top cap forming a terminal having an outlet, a safety vent positioned under the top cap and having a notch formed to be reversed in shape toward the top cap and ruptured when an inner pressure of a battery is increased, a current blocking member positioned under the safety vent and including a central portion connected to the safety vent and an outer peripheral portion not connected to the safety vent and a blocking member gasket surrounding the outer circumferential surface of the current blocking member and insulating the safety vent and the outer circumferential surface of the current blocking member from each other. The current blocking member further includes a heat-resistant insulating member disposed at a position facing the blocking member gasket to insulate the outer circumferential surface and the safety vent from each other even when the blocking member gasket is melted due to heat generated by an external short circuit.

The above information disclosed in this Background section is only for enhancement of understanding of the background of the invention and therefore it may contain information that does not constitute prior art.

### DESCRIPTION OF EMBODIMENTS

### TECHNICAL PROBLEM

The present invention provides a secondary battery capable of improving safety by easily discharging internal gas.

### SOLUTION TO PROBLEM

A secondary battery according to the present invention is defined in claim 1 as appended hereto. Dependent claims define advantageous embodiments.

### ADVANTAGEOUS EFFECTS OF INVENTION

In the secondary battery according to an embodiment of the present invention, a notch of a safety vent is exposed through an opening of a cap-up, and thus internal gas is rapidly vented, thereby improving safety.

### BRIEF DESCRIPTION OF DRAWINGS

FIG. 1 is a cross-sectional view of a secondary battery according to an embodiment of the present invention.
FIG. 2 is a cross-sectional view of a cap assembly in a secondary battery according to an embodiment of the present invention.
FIGS. 3 and 4 are views illustrating inside and outside areas of an opening according to the position of a notch.

### BEST MODE

Hereinafter, a preferred embodiment of the present invention will be described in detail with reference to the accompanying drawings.

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this invention will be thorough and complete and will convey the aspects and features of the present invention to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

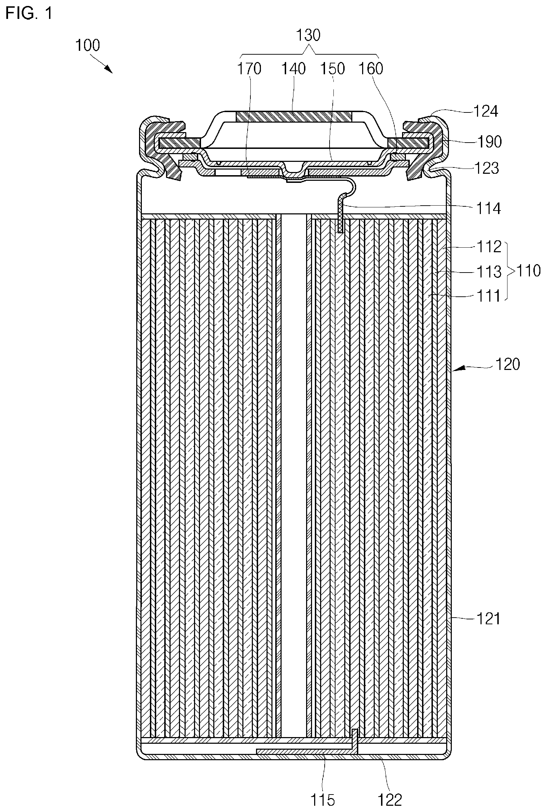

FIG. 1 is a cross-sectional view of a secondary battery according to an embodiment of the present invention.

Referring to FIG. 1, a secondary battery 100 according to an embodiment of the present invention includes an electrode assembly 110, a case 120, a cap assembly 130, and a gasket 190.

The electrode assembly 110 includes a first electrode 111, a second electrode 112, and a separator 113 interposed between the first electrode 111 and the second electrode 112. The electrode assembly 110 may be formed by winding a stack of the first electrode 111, the separator 113, and the second electrode 112 in a jelly-roll shape. Here, the first electrode 111 may act as a positive electrode, and the second electrode 112 may act as a negative electrode. A first electrode tab 114 is connected to the cap assembly 130 at the top of the electrode assembly 110, and a second electrode tab 115 is connected to a bottom plate 122 of the case 120 at the bottom thereof.

The first electrode 111 is formed by applying a first electrode active material such as a transition metal oxide to a first electrode current collector formed of a metal foil such as aluminum. A first electrode uncoated portion to which the first electrode active material is not applied is formed on the first electrode 111, and the first electrode tab 114 is attached to the first electrode uncoated portion. One end of the first electrode tab 114 is electrically connected to the first electrode 111, and the other end protrudes upward from the electrode assembly 110 and is electrically connected to the cap assembly 130.

The second electrode 112 is formed by applying a second electrode active material such as graphite or carbon to a second electrode current collector formed of a metal foil such as copper or nickel. An uncoated portion of the second electrode to which the second electrode active material is not applied is formed on the second electrode 112, and the second electrode tab 115 is attached to the uncoated portion of the second electrode. One end of the second electrode tab 115 is electrically connected to the second electrode 112, and the other end protrudes from the bottom of the electrode assembly 110 and is electrically connected to the lower plate 122 of the case 120.

The separator 113 is positioned between the first electrode 111 and the second electrode 112 to prevent a short circuit and to enable the movement of lithium ions. The separator 113 may be made of polyethylene, polypropylene, or a composite film of polyethylene and polypropylene.

The case 120 includes a side plate 121 which is a cylindrical body having a certain diameter so as to form a space in which the electrode assembly 110 is accommodated, and a lower plate 122 that seals a lower portion of the side plate 121. The top opening of the case 120 is opened to seal after inserting the electrode assembly 110 therein. In addition, a beading part 123 for preventing the movement of the electrode assembly 110 is formed on the top of the case 120. In addition, a crimping part 124 for fixing the cap assembly 130 and the gasket 190 is formed at the uppermost end of the case 120. The crimping part 124 has a gasket 190 interposed therebetween and is formed to press the cap assembly 130 to prevent separation of the cap assembly 130 and leakage of an electrolyte.

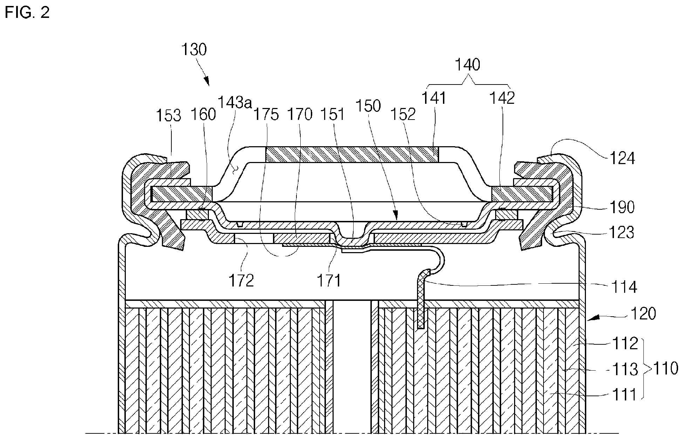

FIG. 2 is a cross-sectional view of a cap assembly in a secondary battery according to an embodiment of the present invention.

Referring to FIG. 2, the cap assembly 130 includes a cap-up 140, a safety vent 150, an insulator 160, and a cap-down 170.

The cap-up 140 is formed as a circular plate body and may include a terminal portion 141 convexly formed upward in the center, a coupling portion 142 located on the outer periphery of the terminal portion 141, and a connecting portion 143 connecting the terminal portion 141 and the coupling portion 142.

The terminal portion 141 protrudes upward compared to the coupling portion 142 and serves as a terminal electrically connected to an external circuit. The terminal portion 141 is electrically connected to the first electrode tab 114 and may act as, for example, a positive electrode. The coupling portion 142 is located on the outer periphery of the terminal portion 141, and the safety vent 150 is coupled to the coupling portion 142. A vent extending portion 153 of the safety vent 150 is coupled to an upper portion of the coupling portion 142. The connecting portion 143 connects the terminal portion 141 and the coupling portion 142, and an opening 143a is formed in the connecting portion 143. The opening 143a may include a plurality of openings formed in the connecting portion 143 and may provide a path through which gas generated inside the case 120 can be vented. In addition, a portion of the opening 143a may extend to the terminal portion 141 and the coupling portion 142. In some examples, when the opening 143a extends to the terminal portion 141, the diameter of the terminal portion 141 decreases and the area occupied by the opening 143a increases.

The safety vent 150 is formed as a circular plate body corresponding to the cap-up 140 and coupled to the lower portion of the cap-up 140. A protrusion 151 protruding downward is formed at the center of the safety vent 150. The safety vent 150 is electrically connected to a sub-plate 175 fixed to the lower surface of the cap-down 170 by using the protrusion 151 passing through a through-hole 171 of the cap-down 170. Here, the protrusion 151 of the safety vent 150 and the sub-plate 175 may be welded by laser welding, ultrasonic welding, resistance welding, or an equivalent method thereof.

In addition, a notch 152 that guides rupture of the safety vent 150 is formed on the outer periphery of the protrusion 151. The safety vent 150 vents internal gas while blocking current when an abnormal internal pressure is generated inside the case 120. When the internal pressure of the case 120 exceeds an operating pressure of the safety vent 150, the safety vent 150 is electrically separated from the sub-plate 175 while the protrusion 151 rises upward by the gas vented through a gas vent hole 172 of the cap-down 170. Here, the sub-plate 175 is electrically separated from the safety vent 150 as the welded portion of the protrusion 151 is torn. In addition, in the safety vent 150, when the internal pressure of the case 120 exceeds a rupture pressure higher than the operating pressure of the safety vent 150, the notch 152 is broken, thereby preventing the secondary battery 100 from exploding. The safety vent 150 may be formed of aluminum (Al).

According to the invention, the notch 152 is formed in a circular shape along the outer periphery of the safety vent 150 and is located at a position corresponding to the opening 143a formed in the cap-up 140, that is, below the opening 143a, and is exposed to the outside through the opening 143a. That is, the notch 152 may be visually identified from the outside of the secondary battery 100 through the opening 143a. In addition, since the opening 143a is positioned above the notch 152, when the notch 152 is broken by the internal gas, the gas can be rapidly vented through the opening 143a.

The safety vent 150 is installed in close contact with the coupling portion 142 at the bottom of the cap-up 140. In addition, the edge of the safety vent 150 surrounds the cap-up 140 and extends to the top of the cap-up 140. Here, a portion extending upward from the cap-up 140 is defined as a vent extending portion 153. In some examples, the safety vent 150 may be fixed to the cap-up 140 by welding an upper portion of the vent extending portion 153.

The insulator 160 is interposed between the safety vent 150 and the cap-down 170 and insulates the safety vent 150 and the cap-down 170 from each other. Specifically, the insulator 160 is formed in a ring shape and is interposed between the outer periphery of the safety vent 150 and the outer periphery of the cap-down 170. The insulator 160 may be made of a resin material such as polyethylene (PE), polypropylene (PP), or polyethylene terephthalate (PET).

The cap-down 170 is formed as a circular plate body. The through hole 171 is formed at the center of the cap-down 170, and the protrusion 151 of the safety vent 150 passes through the through hole 171. In addition, a gas vent hole 172 is formed at one side of the cap-down 170, and the sub-plate 175 is coupled to the lower portion of the cap-down 170. The gas vent hole 172 serves to vent internal gas when excessive internal pressure is generated inside the case 120. Here, the protrusion 151 of the safety vent 150 is raised by the gas vented through the gas vent hole 172, and the protrusion 151 may be separated from the sub-plate 175. The sub-plate 175 is welded between the protrusion 151 of the safety vent 150 passing through the through hole 171 of the cap-down 170 and the first electrode tab 114. Accordingly, the sub-plate 175 may electrically connect the first electrode tab 114 and the safety vent 150. In some examples, the gas vent hole 172 may be formed at a position corresponding to a portion of the safety vent 150 where the notch 152 is formed. Accordingly, a path through which gas is vented may be shortened, thereby facilitating gas venting.

The gasket 190 is installed in the top opening of the case 120. That is, the gasket 190 is tightly assembled between the outer periphery of the cap-up 140 and the safety vent 150 and the top opening of the case 120. The gasket 190 may be made of a resin material such as polyethylene (PE), polypropylene (PP), or polyethylene terephthalate (PET). The gasket 190 may electrically insulate the case 120 and the cap assembly 130 from each other.

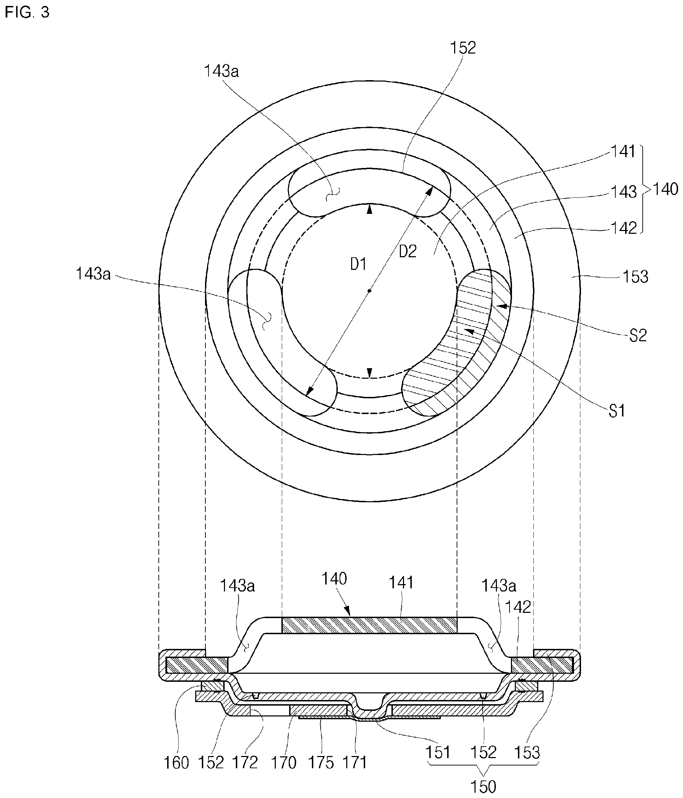

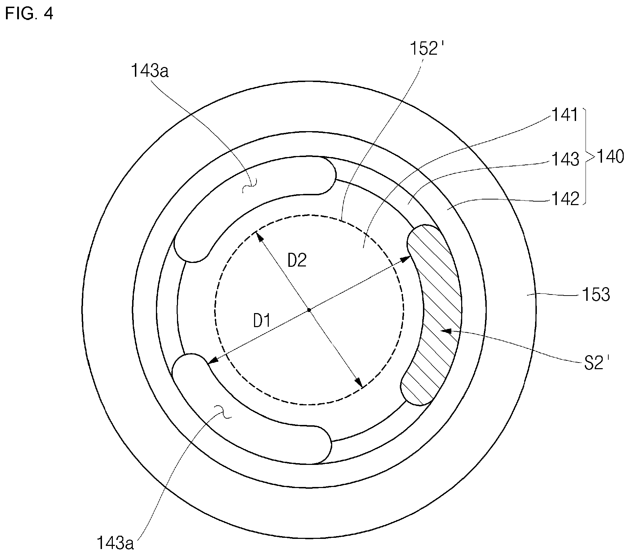

FIGS. 3 and 4 are views illustrating inside and outside areas of an opening according to the position of a notch.

Referring to FIG. 3, in the secondary battery 100 according to the present invention, since the notch 152 of the safety vent 150 is exposed through the opening 143a of the cap-up 140, the area of the opening 143a of the cap-up 140 may be divided into an inner area S1 positioned inside the notch 152 and an outer area S2 positioned outside the notch 152 based on the line where the notch 152 is formed. In some examples, as shown in FIG. 4, when the notch 152 is positioned below the terminal portion 141 without being exposed through the opening 143a, the opening 143a consists of only an outer area S2' without an inner area. That is, the proportion of the inner area of the opening 143a is 0%, and the proportion of the outer area S2' is 100%.

Referring back to FIG. 3, the inner area S1 of the opening 143a may be determined by a diameter D1 of the terminal portion 141 of the cap-up 140 and a diameter D2 of the notch 152. The outer area S2 may be determined by the diameter D2 of the notch 152 and the diameter of the connecting portion 143. In the present invention, the diameter D2 of the notch 152 is larger than the diameter D1 of the terminal portion 141 and smaller than the diameter of the connecting portion 143.

In some examples, the inner area S1 may increase as a difference between the diameter D1 of the terminal portion 141 and the diameter D2 of the notch 152 increases. In addition, the wider the inner area S1 of the opening 143a, that is, the larger the diameter D2 of the notch 152, the faster the internal gas of the secondary battery 100 can be vented to the outside.

In order to evaluate the safety of the secondary battery 100 according to the proportions of the inner area S1 and the outer area S2 of the opening 143a, a thermal diffusion test (passive propagation resistance test (PPR test)) was performed. The thermal diffusion test is a thermal safety evaluation method for evaluating the degree of influence that a thermal runaway event in one cell (secondary battery) may cause chain ignition by thermal diffusion propagation to adjacent cells, in an EV/ESS/E-bike, etc., which constitutes a module or pack by using multiple secondary batteries.

First, each 10 secondary batteries each having a different proportion of the inner area occupied are prepared, and secondary batteries having the same inner area are formed into one battery pack. Next, a thermal diffusion test was performed for each battery pack, and the results are shown in Table 1.

**[Table 1]**

| Classification | Terminal portion diameter (mm) | Notch diameter (mm) | Outer area | Inner area | Total area (mm²) | PPR result |
|---|---|---|---|---|---|---|
| | | | Proportion | Proportion | | |
| Comparative example 1 | 9 | 8 | 8.33 | 0 | 8.33 | NG 10/10 |
| | | | 100% | 0% | | |
| Comparative example 2 | 9 | 9 | 8.33 | 0 | 8.33 | NG 6/10 |
| | | | 100% | 0% | | |
| Comparative example 3 | 9 | 10 | 5.1 | 3.23 | 8.33 | NG 4/10 |
| | | | 61% | 39% | | |
| Comparative example 4 | 8.5 | 10 | 5.1 | 4.75 | 9.85 | NG 2/10 |
| | | | 52% | 48% | | |
| Example 1 | 8 | 10 | 5.1 | 6.19 | 11.29 | OK 10/10 |
| | | | 45% | 55% | | |
| Example 2 | 7.5 | 10 | 5.1 | 7.38 | 12.48 | OK 10/10 |
| | | | 41% | 59% | | |
| Example 3 | 6.5 | 10 | 5.1 | 9.49 | 14.59 | OK 10/10 |
| | | | 35% | 65% | | |
| Example 4 | 4.85 | 10 | 5.1 | 11.41 | 16.51 | OK 10/10 |
| | | | 31% | 69% | | |

First, referring to Comparative Example 1, when the notch diameter D2 is smaller than the terminal portion diameter D1 and the proportion of the inner area S1 is 0%, 10 secondary batteries were all ignited and assessed as NG. In Comparative Example 1, since the notch diameter D2 is located inside the opening 143a, the gas vented through the notch 142 bumped into the terminal portion 141, making it difficult to vent the internal gas, and thus the side surface of secondary battery was torn to be ignited. In Comparative Example 2 in which the notch diameter D2 and the terminal portion diameter D1 are the same, when the proportion of the inner area S1 is 0%, 6 out of 10 secondary batteries were ignited and assessed as NG. In Comparative Example 3, when the notch diameter D2 is larger than the terminal portion diameter D1 and the proportion of the inner area S1 is 39%, 4 out of 10 secondary batteries were ignited and assessed as NG. In Comparative Example 4, when the notch diameter D2 is larger than the terminal portion diameter D1 and the proportion of the inner area S1 is 48%, 2 out of 10 secondary batteries were ignited and assessed as NG. next, referring to Example 1, when the notch diameter D2 is larger than the terminal portion diameter D1 and the proportion of the inner area S1 is 55%, 10 secondary batteries were all ignited and assessed as OK. In Examples 2 to 4, when the notch diameter D2 is larger than the terminal portion diameter D1 and the proportions of the inner area S1 are 59%, 65%, and 69%, respectively, 10 secondary batteries were all ignited and assessed as OK.

As described above, if the proportion of the inner area S1 of the opening 143a is 55% or more, it can be seen that the gas generated inside the secondary battery 100 is quickly vented through the opening 143a to prevent thermal diffusion propagation to an adjacent secondary battery 100 due to generation of internal gas.

While the foregoing embodiment has been provided for carrying out the secondary battery according to the present invention, it should be understood that the embodiment described herein should be considered in a descriptive sense and various changes in form and details may be made Therei. The scope of the invention is defined by the following claims.

### INDUSTRIAL APPLICABILITY

The present invention relates to a secondary battery.

## Claims

1. A secondary battery (100) comprising:
an electrode assembly (110);
a case (120) in which the electrode assembly (110) is accommodated; and
a cap assembly (130) which is coupled to the top of the case (120) and comprises a cap-up (140) having opening (143a), and a safety vent (150) provided under the cap-up (140) and having a notch (152) to be ruptured at a predetermined pressure or higher,
the cap-up (140) including a terminal portion (141) formed as a circular plate body, a coupling portion (142) located on the outer periphery of the terminal portion (141), and a connecting portion (143) connecting the terminal portion (141) and the coupling portion (142),
wherein the notch (152) is exposed to the outside through the opening (143a),
wherein the diameter of the notch (152) is larger than the diameter of a terminal portion (141) of the cap-up (140) and smaller than the diameter of a connecting portion (143) of the cap-up (140),
wherein the notch is located at a position corresponding to the opening (143a) formed in the cap-up (140) and formed in a circular shape along the outer periphery of the safety vent (150).

2. The secondary battery of claim 1, wherein the area of the opening includes an inner area (S1) positioned inside the notch (152) and an outer area (S2) positioned outside the notch (152).

3. The secondary battery of claim 2, wherein the inner area (S1) is set to 55% or more of the total area of the opening.

4. The secondary battery of claim 2, wherein the terminal portion (141) protrudes upward, the coupling portion (142) is coupled to the safety vent (150), and the opening (143a) is formed in the connecting portion (143).

5. The secondary battery (100) of claim 2, wherein an inner area (S1) of the opening (143a) is determined by a diameter of the terminal portion (D1) and a diameter of the notch.

6. The secondary battery (100) of claim 2, wherein an outer area (S2) of the opening (143a) is determined by a diameter of the notch and a diameter of the connecting portion (D2).

7. The secondary battery (100) of any one of claims 1 to 6, wherein a gas vent hole (172) located below the notch (152) is formed in the cap-down (170).

8. The secondary battery (100) of any one of claims 1 to 7, further comprising a gasket (190) positioned between the cap assembly (130) and the case (120).

9. The secondary battery (100) of any one of claims 1 to 8, wherein at least the part of the notch (152) is configured to be visually identified from the outside of the secondary battery (100) through the opening (143a).

10. The secondary battery (100) of any one of claims 1 to 9, wherein the opening (143a) is positioned above the notch (152).

11. The secondary battery (100) of any one of claims 1 to 10, wherein the electrode assembly includes a first electrode (111), a second electrode (112), and a separator (113) between the first electrode (111) and the second electrode (112),
wherein the first electrode (111) includes a first electrode uncoated portion to which the first electrode active material is not applied,
wherein the second electrode (112) includes a second electrode uncoated portion to which the second electrode active material is not applied,
wherein a first electrode tab (114) is coupled to the first electrode uncoated portion, and
wherein a second electrode tab (115) is coupled to the second electrode uncoated portion.

12. The secondary battery (100) of claim 11, wherein one end of the first electrode tab (114) is electrically connected to the first electrode (111), and the other end of the first electrode tab (114) upwardly protrudes from the electrode assembly (110) and is electrically connected to the cap assembly (130),
wherein one end of the second electrode tab (115) is electrically connected to the second electrode (112), and the other end of the second electrode tab (115) downwardly protrudes from the electrode assembly (110) and is electrically connected to a bottom plate (122) of the case (120).

13. The secondary battery (100) of claim 11 or 12, wherein the first electrode (111) is a positive electrode, and
wherein the second electrode (112) is a negative electrode.

14. The secondary battery (100) of any one of claims 1 to 13, wherein the cap assembly further comprising a cap-down (170) provided under the safety vent (150) and electrically connected to the electrode assembly (110).

15. The secondary battery (100) of any one of claims 1 to 13, wherein the case (120) comprises a side plate 121 which is a cylindrical body and a lower plate (122) that seals a lower portion of the side plate (121).

## Patentansprüche

1. Sekundärbatterie (100), umfassend:
eine Elektrodenanordnung (110);
ein Gehäuse (120), in dem die Elektrodenanordnung (110) aufgenommen ist; und
eine Kappenanordnung (130), die mit der Oberseite des Gehäuses (120) gekoppelt ist und eine Aufwärtskappe (140), der eine Öffnung (143a) aufweist, und ein unter der Aufwärtskappe (140) bereitgestelltes Sicherheitsventil (150) umfasst und eine Kerbe (152) aufweist, um bei einem vorbestimmten Druck oder darüber aufgebrochen zu werden,
wobei der Aufwärtskappe (140) einen Endabschnitt (141), der als kreisförmiger Plattenkörper gebildet ist, einen Kopplungsabschnitt (142), der sich am äußeren Umfang des Endabschnitts (141) befindet, und einen Verbindungsabschnitt (143) beinhaltet, der den Endabschnitt (141) und den Kopplungsabschnitt (142) verbindet,
wobei die Kerbe (152) durch die Öffnung (143a) hindurch nach außen hin freigelegt ist,
wobei der Durchmesser der Kerbe (152) größer ist als der Durchmesser eines Endabschnitts (141) der Aufwärtskappe (140) und kleiner als der Durchmesser eines Verbindungsabschnitts (143) der Aufwärtskappe (140),
wobei sich die Kerbe in einer Position befindet, die der in der Aufwärtskappe (140) gebildeten Öffnung (143a) entspricht und in einer Kreisform entlang des äußeren Umfangs des Sicherheitsventils (150) gebildet ist.

2. Sekundärbatterie nach Anspruch 1, wobei der Bereich der Öffnung einen inneren Bereich (S1), der innerhalb der Kerbe (152) positioniert ist, und einen äußeren Bereich (S2), der außerhalb der Kerbe (152) positioniert ist, beinhaltet.

3. Sekundärbatterie nach Anspruch 2, wobei der innere Bereich (S1) auf 55 % oder mehr des Gesamtbereichs der Öffnung gesetzt ist.

4. Sekundärbatterie nach Anspruch 2, wobei der Endabschnitt (141) nach oben hervorsteht, der Kopplungsabschnitt (142) mit dem Sicherheitsventil (150) gekoppelt ist und die Öffnung (143a) im Verbindungsabschnitt (143) gebildet ist.

5. Sekundärbatterie (100) nach Anspruch 2, wobei ein innerer Bereich (S1) der Öffnung (143a) durch einen Durchmesser des Endabschnitts (D1) und einen Durchmesser der Kerbe bestimmt wird.

6. Sekundärbatterie (100) nach Anspruch 2, wobei ein äußerer Bereich (S2) der Öffnung (143a) durch einen Durchmesser der Kerbe und einen Durchmesser des Verbindungsabschnitts (D2) bestimmt wird.

7. Sekundärbatterie (100) nach einem der Ansprüche 1 bis 6, wobei ein Gasentlüftungsloch (172), das sich unterhalb der Kerbe (152) befindet, in der Abwärtskappe (170) gebildet ist.

8. Sekundärbatterie (100) nach einem der Ansprüche 1 bis 7, weiter eine Dichtung (190) umfassend, die zwischen der Kappenanordnung (130) und dem Gehäuse (120) positioniert ist.

9. Sekundärbatterie (100) nach einem der Ansprüche 1 bis 8, wobei mindestens der Teil der Kerbe (152) konfiguriert ist, um von außerhalb der Sekundärbatterie (100) durch die Öffnung (143a) hindurch visuell erkennbar zu sein.

10. Sekundärbatterie (100) nach einem der Ansprüche 1 bis 9, wobei die Öffnung (143a) oberhalb der Kerbe (152) positioniert ist.

11. Sekundärbatterie (100) nach einem der Ansprüche 1 bis 10, wobei die Elektrodenanordnung eine erste Elektrode (111), eine zweite Elektrode (112) und einen Separator (113) zwischen der ersten Elektrode (111) und der zweiten Elektrode (112) beinhaltet,
wobei die erste Elektrode (111) einen ersten unbeschichteten Elektrodenabschnitt beinhaltet, auf den das erste aktive Elektrodenmaterial nicht aufgebracht ist,
wobei die zweite Elektrode (112) einen zweiten unbeschichteten Elektrodenabschnitt beinhaltet, auf den das zweite aktive Elektrodenmaterial nicht aufgebracht ist,
wobei eine erste Elektrodenlasche (114) mit dem ersten unbeschichteten Elektrodenabschnitt gekoppelt ist, und
wobei eine zweite Elektrodenlasche (115) mit dem zweiten unbeschichteten Elektrodenabschnitt gekoppelt ist.

12. Sekundärbatterie (100) nach Anspruch 11, wobei ein Ende der ersten Elektrodenlasche (114) elektrisch mit der ersten Elektrode (111) verbunden ist und das andere Ende der ersten Elektrodenlasche (114) nach oben aus der Elektrodenanordnung (110) hervorsteht und elektrisch mit der Kappenanordnung (130) verbunden ist,
wobei ein Ende der zweiten Elektrodenlasche (115) elektrisch mit der zweiten Elektrode (112) verbunden ist und das andere Ende der zweiten Elektrodenlasche (115) nach unten aus der Elektrodenanordnung (110) hervorsteht und elektrisch mit einer Bodenplatte (122) des Gehäuses (120) verbunden ist.

13. Sekundärbatterie (100) nach Anspruch 11 oder 12, wobei die erste Elektrode (111) eine positive Elektrode ist, und
wobei die zweite Elektrode (112) eine negative Elektrode ist.

14. Sekundärbatterie (100) nach einem der Ansprüche 1 bis 13, wobei die Kappenanordnung weiter eine unter dem Sicherheitsventil (150) bereitgestellte und mit der Elektrodenanordnung (110) elektrisch verbundene Abwärtskappe (170) umfasst.

15. Sekundärbatterie (100) nach einem der Ansprüche 1 bis 13, wobei das Gehäuse (120) eine Seitenplatte 121, die ein zylindrischer Körper ist, und eine untere Platte (122), die einen unteren Abschnitt der Seitenplatte (121) abdichtet, umfasst.

## Revendications

1. Batterie secondaire (100) comprenant :
un ensemble d'électrodes (110) ;
un boîtier (120) dans lequel est logé l'ensemble d'électrodes (110) ; et
un ensemble capuchon (130) qui est couplé au haut du boîtier (120) et comprend un capuchon supérieur (140) présentant une ouverture (143a), et un évent de sûreté (150) disposé sous le capuchon (140) et présentant une encoche (152) destinée à être rompue à une pression prédéterminée ou plus élevée,
le capuchon supérieur (140) incluant une partie terminale (141) formée comme un corps de plaque circulaire, une partie de couplage (142) située sur la périphérie extérieure de la partie terminale (141) et une partie de connexion (143) reliant la partie terminale (141) et la partie de couplage (142),
dans laquelle l'encoche (152) est exposée à l'extérieur à travers l'ouverture (143a),
dans laquelle le diamètre de l'encoche (152) est plus grand que le diamètre d'une partie terminale (141) du capuchon supérieur (140) et plus petit que le diamètre d'une partie de connexion (143) du capuchon supérieur (140),
dans laquelle l'encoche est située à une position correspondant à l'ouverture (143a) formée dans le capuchon supérieur (140) et formée en forme circulaire le long de la périphérie extérieure de l'évent de sûreté (150).

2. Batterie secondaire selon la revendication 1, dans laquelle la zone de l'ouverture inclut une zone intérieure (S1) positionnée à l'intérieur de l'encoche (152) et une zone extérieure (S2) positionnée à l'extérieur de l'encoche (152).

3. Batterie secondaire selon la revendication 2, dans laquelle la zone intérieure (S1) est fixée à 55 % ou plus de la zone totale de l'ouverture.

4. Batterie secondaire selon la revendication 2, dans laquelle la partie terminale (141) fait saillie vers le haut, la partie de couplage (142) est couplée à l'évent de sûreté (150) et l'ouverture (143a) est formée dans la partie de connexion (143).

5. Batterie secondaire (100) selon la revendication 2, dans laquelle une zone intérieure (S1) de l'ouverture (143a) est déterminée par un diamètre de la partie terminale (D1) et un diamètre de l'encoche.

6. Batterie secondaire (100) selon la revendication 2, dans laquelle une zone extérieure (S2) de l'ouverture (143a) est déterminée par un diamètre de l'encoche et un diamètre de la partie de connexion (D2).

7. Batterie secondaire (100) selon l'une quelconque des revendications 1 à 6, dans laquelle un trou d'évent de gaz (172) situé sous l'encoche (152) est formé dans le capuchon inférieur (170).

8. Batterie secondaire (100) selon l'une quelconque des revendications 1 à 7, comprenant en outre un joint (190) positionné entre l'ensemble capuchon (130) et le boîtier (120).

9. Batterie secondaire (100) selon l'une quelconque des revendications 1 à 8, dans laquelle au moins la partie de l'encoche (152) est configurée pour être identifiée visuellement de l'extérieur de la batterie secondaire (100) à travers l'ouverture (143a).

10. Batterie secondaire (100) selon l'une quelconque des revendications 1 à 9, dans laquelle l'ouverture (143a) est positionnée au-dessus de l'encoche (152).

11. Batterie secondaire (100) selon l'une quelconque des revendications 1 à 10, dans laquelle l'ensemble d'électrodes inclut une première électrode (111), une seconde électrode (112) et un séparateur (113) entre la première électrode (111) et la seconde électrode (112),
dans laquelle la première électrode (111) inclut une partie non revêtue de première électrode à laquelle le matériau actif de la première électrode n'est pas appliqué,
dans laquelle la seconde électrode (112) inclut une seconde partie non revêtue sur laquelle le matériau actif de la seconde électrode n'est pas appliqué,
dans laquelle une première languette d'électrode (114) est couplée à la partie non revêtue de la première électrode, et
dans laquelle une seconde languette d'électrode (115) est couplée à la partie non revêtue de la seconde électrode.

12. Batterie secondaire (100) selon la revendication 11, dans laquelle une extrémité de la première languette d'électrode (114) est connectée électriquement à la première électrode (111), et l'autre extrémité de la première languette d'électrode (114) dépasse vers le haut de l'ensemble d'électrodes (110) et est connectée électriquement à l'ensemble capuchon (130),
dans laquelle une extrémité de la seconde languette d'électrode (115) est connectée électriquement à la seconde électrode (112), et l'autre extrémité de la seconde languette d'électrode (115) dépasse vers le bas de l'ensemble d'électrodes (110) et est connectée électriquement à une plaque inférieure (122) du boîtier (120).

13. Batterie secondaire (100) selon la revendication 11 ou 12, dans laquelle la première électrode (111) est une électrode positive, et
dans laquelle la seconde électrode (112) est une électrode négative.

14. Batterie secondaire (100) selon l'une quelconque des revendications 1 à 13, dans laquelle l'ensemble capuchon comprend en outre un capuchon inférieur (170) disposé sous l'évent de sûreté (150) et connecté électriquement à l'ensemble d'électrodes (110).

15. Batterie secondaire (100) selon l'une quelconque des revendications 1 à 13, dans laquelle le boîtier (120) comprend une plaque latérale 121 qui est un corps cylindrique et une plaque inférieure (122) qui scelle une partie inférieure de la plaque latérale (121).
